# EUROPÄISCHE PATENTSCHRIFT

(11) **EP 3 126 128 B1**
(45) Veröffentlichungstag und Bekanntmachung des Hinweises auf die Patenterteilung: **01.07.2020**
(21) Anmeldenummer: 15705955.1
(22) Anmeldetag: 12.02.2015
(51) Int. Cl.: B29C 70/54, B29C 37/00, B29C 33/46

(54) **WERKZEUG ZUR HERSTELLUNG EINES FASERVERBUNDBAUTEILS**
MOULD FOR PRODUCING A FIBRE COMPOSITE COMPONENT
OUTIL POUR FABRIQUER UN COMPOSANT EN MATÉRIAU COMPOSITE RENFORCÉ PAR DES FIBRES

(30) Priorität: 04.04.2014 DE 102014206500
(43) Veröffentlichungstag der Anmeldung: 08.02.2017
(73) Patentinhaber: Bayerische Motoren Werke Aktiengesellschaft, 80809 München (DE)
(72) Erfinder: BRANDL, Reinhard, 84094 Elsendorf (DE); GLÜCK, Bernhard, 82256 Fürstenfeldbruck (DE); KRUKOWSKI, Katrin, 81677 München (DE); SCHÜTTE, Jan, 81825 München (DE); HOFFMANN, Jürgen, 83607 Holzkirchen (DE)
(86) Internationale Anmeldenummer: PCT/EP2015/052926
(87) Internationale Veröffentlichungsnummer: WO 2015/149978

(56) Entgegenhaltungen:
- EP-A1- 2 308 670
- EP-A2- 1 800 826
- FR-A1- 2 843 065
- FR-A1- 2 926 241
- US-A1- 2011 291 325

## Beschreibung

Die Erfindung betrifft ein Werkzeug zur Herstellung eines Faserverbundbauteils.

Faserverbundbauteile kommen in der Industrie immer mehr zum Einsatz, beispielsweise in der Automobilindustrie. Die Herstellung der Faserverbundbauteile kann auf unterschiedliche Weise erfolgen, wobei sie typischerweise durch ein Pressverfahren hergestellt werden. Unter diesem Pressverfahren ist unter anderem ein Pre-Preg-Pressen als auch ein Nasspressen zu verstehen. Beim Nasspressen wird ein flüssiges Harz auf ein trockenes textiles Halbzeug gebracht und innerhalb des Werkzeugs verpresst, sodass das Faserverbundbauteil entsteht. Das Benetzen des trockenen textilen Halbzeugs kann vor oder nach dem Einlegen des textilen Halbzeugs geschehen. Beim Pre-Preg-Pressen wird dagegen ein bereits vorimprägniertes textiles Halbzeug verwendet, das in einem Werkzeug gepresst wird. Anschließend härten die Faserverbundbauteile im Werkzeug aus.

Zur Herstellung eines Faserverbundbauteils wird typischerweise ein Werkzeug verwendet, das aus zwei Werkzeugteilen, üblicherweise Werkzeughälften besteht, die zueinander verfahrbar sind. Die Werkzeughälften sind derart ausgestaltet, dass sie im zusammengefahrenen Zustand eine Kavität ausbilden. Zur Herstellung des Faserverbundbauteils wird das (zum Beispiel vorimprägnierte) textile Halbzeug zunächst in eine der beiden Werkzeughälften eingelegt und, beim Nasspressen, mit flüssigem Harz benetzt. Anschließend wird die zweite Werkzeughälfte zur ersten Werkzeughälfte derart verfahren, dass sich die Kavität ausbildet. Nun beginnt das Pressverfahren. Nach dem Pressen und dem Aushärten des Faserverbundbauteils werden die beiden Werkzeughälften wieder auseinandergefahren, sodass das Faserverbundbauteil entnommen werden kann. Typischerweise weisen die Werkzeughälften Auswerfer auf, über die das fertiggestellte Faserverbundbauteil ausgeworfen werden kann.

Es hat sich herausgestellt, dass beim Auseinanderfahren der beiden Werkzeughälften keine definierte und sichere Positionierung des hergestellten Faserverbundbauteils in einer der beiden Werkzeughälften vorliegt, wodurch sich eine Verzögerung im Herstellungsprozess des Faserverbundbauteils ergibt.

Die US 2011/0291325 A1 beschreibt ein Werkzeug zur Umformung eines Faserverbundbauteils mit einer Form, die eine Vertiefung aufweist, und einem Stempel der ausgebildet ist um einen Streifen aus Faserverbundmaterial in die Vertiefung zu drücken.

Aufgabe der Erfindung ist es, ein Werkzeug zur Herstellung eines Faserverbundbauteils zu schaffen, mit dem es möglich ist, die Lage des hergestellten Faserverbundbauteils in einer der Werkzeughälften zu definieren.

Die Aufgabe wird durch ein Werkzeug zur Herstellung eines Faserverbundbauteils gelöst, mit wenigstens zwei Werkzeugteilen, die Teilkavitäten haben und in einer Herstellungsposition derart zusammengefahren sind, dass sie eine Kavität bilden, in der das Faserverbundbauteil hergestellt werden kann, wobei wenigstens einem ersten Werkzeugteil ein Halteelement zugeordnet ist, das das hergestellte Faserverbundbauteil im ersten Werkzeugteil halten kann, wenn die Werkzeugteile nach der Herstellung des Faserverbundbauteils auseinandergefahren werden, und das zwischen einer Ausgangsposition und einer Halteposition schwenkbar ist.

Der Grundgedanke der Erfindung ist es, das Faserverbundbauteil durch das Halteelement nach seiner Fertigstellung in einem zugeordneten Werkzeugteil zu halten. Hierdurch ist sichergestellt, dass das hergestellte Faserverbundbauteil immer im prozesstechnisch günstigen Werkzeugteil liegt, wodurch der Herstellungsprozess beschleunigt werden kann, da keine manuelle Entnahme aus dem "falschen" Werkzeugteil nötig ist. Es liegt also ein höherer Automatisierungsgrad bei der Herstellung vor. Ferner kann einer der beiden sonst an beiden Werkzeugteilen verwendeten Auswerfer eingespart werden, da nun eine definierte Lage des hergestellten Faserverbundbauteils vorliegt.

Das Halteelement nimmt seine Ausgangsposition ein, wenn die Werkzeugteile zusammengefahren sind, um die Kavität auszubilden. Sobald das Faserverbundbauteil hergestellt worden ist und die Werkzeugteile auseinandergefahren werden sollen, bewegt sich das Halteelement aus seiner Ausgangsposition in die Halteposition, um das fertiggestellte Faserverbundbauteil im zugeordneten Werkzeugteil zu fixieren.

Gemäß einem weiteren Aspekt der Erfindung ist vorgesehen, dass das Halteelement pneumatisch, hydraulisch oder elektrisch betätigbar ist, insbesondere ein pneumatisch, hydraulisch oder elektrisch betätigbarer Spanner ist. Über die verschiedenen Ausführungen, die zum Antrieb des Halteelements dienen, kann die Geschwindigkeit bestimmt werden, mit der das Halteelement aus seiner Ausgangsposition in die Halteposition übergeht. Über die Ausbildung des Halteelements als Spanner ist ein rein mechanischer Ablauf von der Ausgangsposition in die Halteposition sichergestellt. Dies garantiert, dass das Halteelement die Halteposition selbsttätig erreicht. Die Fehleranfälligkeit wird demnach reduziert. Das Halteelement kann allerdings pneumatisch, hydraulisch oder elektrisch in die Ausgangsstellung gebracht werden.

Ein weiterer Aspekt der Erfindung sieht vor, dass die Werkzeugteile jeweils Oberflächen aufweisen, mit denen das herzustellende Faserverbundbauteil in Kontakt ist. Die Oberflächen begrenzen die Kavität, in der das Faserverbundbauteil hergestellt wird. Um die Entnahme des hergestellten Faserverbundbauteils aus dem jeweiligen Werkzeugteil zu erleichtern, weisen die Oberflächen eine geringe Rauigkeit auf. Die Rauigkeit der Oberflächen beträgt mehr als 400 Korn, typischerweise zwischen 800 und 1000 Korn, insbesondere über 1000 Korn. Eine Hochglanz-Politur hat Rauigkeitswerte von 800 bis 1000 Korn, wohingegen eine Rauigkeit ab 1000 Korn einer Spiegel-Politur entspricht, beispielsweise einer Diamant-Schleif-Paste.

Die Oberflächen können beschichtet sein. Über die Beschichtung der Oberflächen wird zum einen die Rauigkeit eingestellt und zum anderen verhindert, dass eine stoffschlüssige Verbindung zwischen dem Faserverbundbauteil und einem der Werkzeugteile während der Herstellung auftritt.

Insbesondere sind die Oberflächen plasmanitriert oder verchromt. Hierdurch wird eine besonders hochwertige Oberfläche der Werkzeugteile im Bereich ihrer Teilkavitäten erreicht. Über das Plasmanitrieren kann eine Spiegelpolitur erreicht werden.

Die Erfindung sieht auch vor, dass das Werkzeug ein Entnahmeelement aufweist, welches das hergestellte Faserverbundbauteil aus dem Werkzeug entnimmt. Da sichergestellt ist, dass sich das hergestellte Faserverbundbauteil immer in einem vordefinierten Werkzeugteil befindet, kann der Herstellungsprozess weiter automatisiert werden. Das Entnahmeelement kann dem vordefinierten Werkzeugteil zugeordnet werden.

Gemäß einem Aspekt der Erfindung umfasst das Entnahmeelement wenigstens einen Vakuumsauger, über den das hergestellte Faserverbundbauteil entnommen werden kann. Mit dem Vakuumsauger ist eine einfache und sichere Entnahme des hergestellten Faserverbundbauteils gewährleistet, die das Risiko einer Beschädigung des Faserverbundbauteils bei der Entnahme minimiert.

Das Entnahmeelement kann ein Roboter sein, insbesondere ein Roboter mit einem beweglichen Arm. Hiermit wird die Automatisierung des Herstellungsprozesses weiter vorangetrieben, da das hergestellte Faserverbundbauteil über den beweglichen Arm zu einer weiteren Bearbeitungsstation transportiert werden kann.

Wenigstens ein Luftauswerfer kann in zumindest einem der Werkzeugteile vorgesehen sein. Der Luftauswerfer unterstützt unter Umständen auch die Positionierung des Faserverbundbauteils in dem definierten Werkzeugteil, indem es über einen Luftstoß das hergestellte Faserverbundbauteil in die andere Werkzeughälfte drückt. Des Weiteren kann der Luftauswerfer die Entnahme des fertiggestellten Faserverbundbauteils aus dem Werkzeug unterstützen, indem der Luftauswerfer das hergestellte Faserverbundbauteil aus dem vordefinierten Werkzeugteil mit einem Luftstoß beaufschlagt, sodass es sich von der Oberfläche löst.

Insbesondere kann in beiden Werkzeugteilen jeweils ein Halteelement vorgesehen sein. Über die beiden Halteelemente kann das fertiggestellte Faserverbundbauteil vom Werkzeug in einfacher Weise gelöst werden. Die beiden Halteelemente können hierzu zeitversetzt angesteuert werden. Zunächst werden die Werkzeugteile auseinander gefahren, wobei das zweite Halteelement das Faserverbundbauteil in einem Werkzeugteil hält, das nicht dem vordefinierten Werkzeugteil entspricht. Hierdurch wird das Faserverbundbauteil beim Auseinanderfahren der Werkzeugteile vom vordefinierten Werkzeugteil gelöst. Anschließend können die Werkzeugteile wieder zusammengefahren werden, wobei das zweite Halteelement in seine Ausgangsstellung übergeht und das erste Halteelement betätigt wird, das das Faserverbundbauteil im vordefinierten Werkzeugteil hält. Die Übergabe kann auch ohne erneutes Zusammenfahren erfolgen, sodass die Übergabe lediglich durch einen Wechsel der Halteelemente erfolgt. Diese Ausführung kann die Luftauswerfer unterstützen oder eine Alternative zu den Luftauswerfern sein.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Querschnittsansicht des erfindungsgemäßen Werkzeugs,
- Figur 2 einen Ausschnitt einer Seitenansicht des erfindungsgemäßen Werkzeugs,
- Figur 3 einen Ausschnitt einer Draufsicht auf das erfindungsgemäße Werkzeug,
- Figur 4 eine Seitenansicht des Abschnitts in Figur 3, und
- Figur 5 eine weitere Ausführungsvariante des Werkzeugs, schematisch dargestellt.

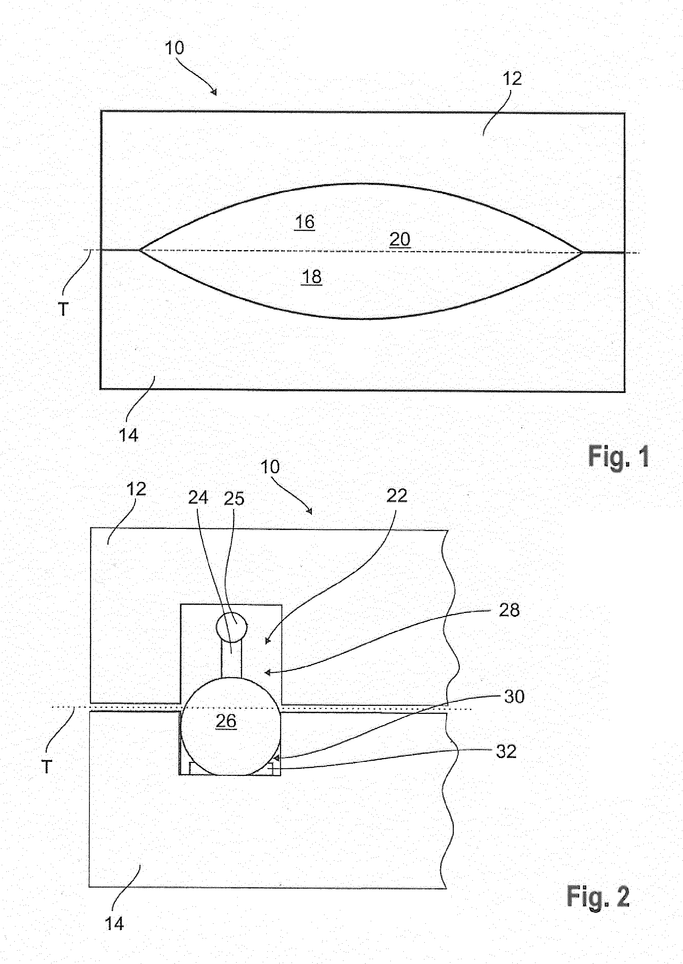

In Figur 1 ist ein Werkzeug 10 zur Herstellung eines Faserverbundbauteils gezeigt, das zwei Werkzeugteile 12, 14 umfasst, die auch Werkzeughälften genannt werden. Die beiden Werkzeugteile 12, 14 sind zueinander beweglich, wobei sie eine Ausgangsstellung (Offenstellung genannt) einnehmen können, in der die beiden Werkzeugteile 12, 14 nicht aneinander anliegen, und eine Herstellungsposition, die in Figur 1 gezeigt ist.

In der Herstellungsposition liegen die beiden Werkzeugteile 12, 14 in der Trennebene T aneinander an.

Die beiden Werkzeugteile 12, 14 weisen jeweils eine Teilkavität 16, 18 auf, die sich in der Herstellungsposition zu einer Kavität 20 ergänzen, in der das Faserverbundbauteil hergestellt wird.

Ferner weist das Werkzeug 10 ein Halteelement 22 auf, welches zum Festhalten des fertiggestellten Faserverbundbauteils verwendet wird. Das Halteelement 22 ist in den Figuren 2 bis 4 gezeigt.

Das Halteelement 22 weist einen Halteabschnitt 24 auf, der beweglich, insbesondere schwenkbar ist. An einem Ende des Halteabschnitts 24 ist ein Haltekopf 25 vorgesehen. Das andere Ende des Halteabschnitts 24 ist einem Antrieb 26 zugeordnet, über den der Halteabschnitt 22 verstellt wird. Der Antrieb 26 ist ebenfalls Teil des Halteelements 22.

Bei dem Antrieb 26 kann es sich um einen pyrotechnischen, hydraulischen oder elektrischen Antrieb handeln.

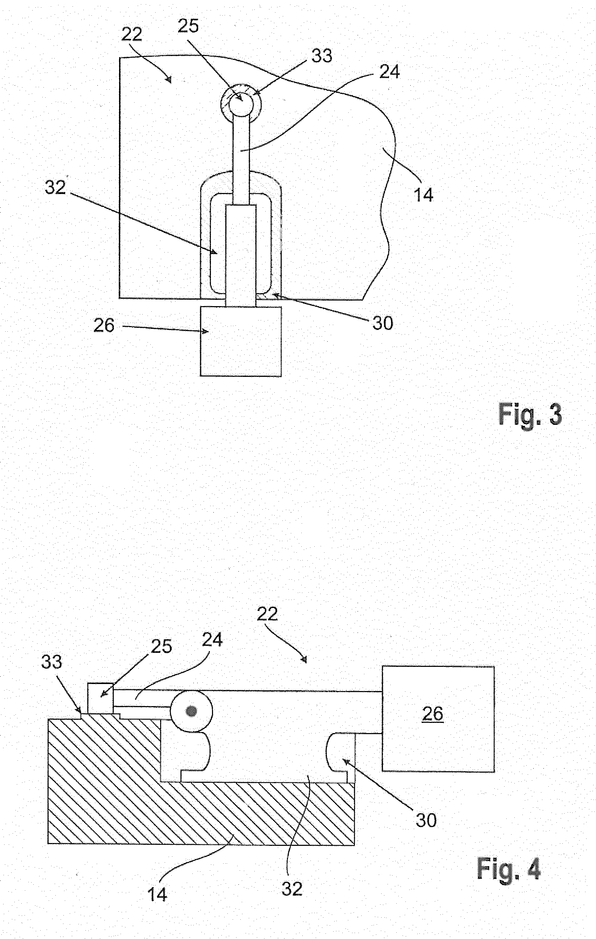

Der Halteabschnitt 24 ist insbesondere um 90° verstellbar, wie ein Vergleich der Figuren 2 und 4 verdeutlicht, die eine Rückansicht und eine Seitenansicht des Werkzeugs 10 mit Blick auf das Halteelement 22 darstellen, wobei das Halteelement 22 in Figur 2 in seiner Ausgangsstellung und in Figur 4 in seiner Halteposition gezeigt ist.

Ein Beispiel zur Ausgestaltung des Halteelements 22 ist ein Spanner.

Aus Figur 2 geht ferner hervor, dass die Werkzeugteile 12, 14 jeweils eine Aussparung 28, 30 aufweisen, in denen das Halteelement 22 aufgenommen ist.

Das Halteelement 22 ist im Werkzeug 10 derart angeordnet, dass es einem der beiden Werkzeugteile (hier: das Werkzeugteil 14) zugeordnet ist, da es über einen Standfuß 32 in der Aussparung 30 des Werkzeugteils 14 in diesem angeordnet ist. Der Halteabschnitt 24 erstreckt sich dagegen in der Ausgangsposition durch die Aussparung 28 des gegenüberliegenden Werkzeugteils 12 (Figur 2).

Das Halteelement 22 fixiert das fertiggestellte Faserverbundbauteil in dem zugeordneten Werkzeugteil 14 nach dessen Herstellung. Dies geschieht wie folgt:
Das Faserverbundbauteil wird im Werkzeug 10 hergestellt, sofern die beiden Werkzeugteile 12, 14 aneinander gefahren sind und sich in der Herstellungsposition befinden. Während der Herstellungsposition des Werkzeugs 10 ist das Halteelement 22 in seiner in Figur 2 gezeigten Ausgangsstellung.

In der Ausgangsstellung befindet sich der Halteabschnitt 24 in der Aussparung 28 des Werkzeugteils 12, wobei sich der bewegliche Halteabschnitt 24 senkrecht zur Trennebene T erstreckt. Das Halteelement 22 liegt somit während der Herstellung des Faserverbundbauteils nicht innerhalb der Kavität 20, sodass dort keine beweglichen Teile angeordnet sind.

Nach dem Aushärten des Faserverbundbauteils werden die beiden Werkzeugteile 12, 14 in der Trennebene T auseinandergefahren, wobei zuvor oder gleichzeitig das Halteelement 22 bzw. der Halteabschnitt 24 über den Antrieb 26 verstellt wird, sodass der Halteabschnitt 24 durch die Ausnehmung 28 in die in den Figuren 3 und 4 gezeigte Haltestellung bewegt wird.

Der Halteabschnitt 24 verschwenkt dabei derart um 70°, dass er durch die Aussparung 28 von oben das fertiggestellte Faserverbundbauteil kontaktiert und es nach dessen Herstellung im Werkzeugteil 14 bzw. der Teilkavität 18 fixierend hält.

Aufgrund der Aussparung 28 im Werkzeugteil 12 ist sichergestellt, dass der Halteabschnitt 24 mit dem fertiggestellten Faserverbundbauteil in Kontakt kommen kann, bevor die beiden Werkzeugteile 12, 14 auseinandergefahren sind.

Das Halteelement 22 kann dabei mit dem Haltekopf 25 direkt am fertiggestellten Faserverbundbauteil anliegen oder, wie aus den Figuren 3 und 4 hervorgeht, mit einer Auflagefläche 33 zusammenwirken, die als Absatz im Werkzeugteil 14 ausgebildet ist. Das fertiggestellte Faserverbundbauteil wird dann vom Halteabschnitt 24 gehalten. Hierbei müssen die Abmessungen des Haltekopfes 25 und die der Auflagefläche auf die Anordnung des Faserverbundbauteils im Werkzeugteil 14 entsprechend abgestimmt sein.

In einer weiteren Ausführungsform umfasst das Werkzeug 10 zwei Halteelemente 22a, 22b.

Ein Halteelement 22a, 22b ist jeweils in einem Werkzeugteil 12, 14 angeordnet, wobei das erste Halteelement 22a dem vordefinierten Werkzeugteil 12 zugeordnet ist, aus dem das fertiggestellte Faserverbundbauteil entnommen werden soll. Das zweite Halteelement 22b ist dem anderen Werkzeugteil 14 zugeordnet.

Die beiden Halteelemente 22a, 22b können insbesondere identisch aufgebaut sein, wobei das in Figur 2 gezeigte Halteelement 22 das erste Haltelement 22a zeigt. Das zweite Halteelement 22b ist in analoger Weise im Werkzeug 10 angeordnet. Zur Darstellung des zweiten Halteelements 22b müssen lediglich die Bezugszeichen der Werkzeugteile 12, 14 in Figur 2 getauscht werden.

Die beiden Halteelemente 22a, 22b werden zeitversetzt angesteuert, sodass das fertiggestellte Faserverbundbauteil nach dem Auseinanderfahren der Werkzeugteile 12, 14 im vordefinierten Werkzeugteil 12 angeordnet ist. Dies geschieht wie folgt:
Nachdem das Faserverbundbauteil ausgehärtet ist werden die beiden Werkzeugteile 12, 14 zunächst ein kleines Stück auseinander gefahren. Hierbei wird das zweite Halteelement 22b betätigt, sodass dieses das fertiggestellte Faserverbundbauteil am Werkzeugteil 14 hält. Hierdurch wird das Faserverbundbauteil vom vordefinierten Werkzeugteil 12 zunächst gelöst.

Anschließend können die beiden Werkzeugteile 12, 14 wieder zusammengefahren werden, beispielsweise bis in die Herstellungsposition oder nur einen Teilweg davon.

In dieser Stellung wird das zweite Halteelement 22b wieder gelöst, sodass es in seine Ausgangsstellung übergeht und das Faserverbundbauteil nicht mehr am Werkzeugteil 14 hält. Gleichzeitig oder im unmittelbaren Anschluss an das Lösen des zweiten Halteelements 22b wird das erste Halteelement 22a betätigt, um das Faserverbundbauteil am vordefinierten Werkzeugteil 12 zu halten.

Alternativ können die beiden Werkzeugteile 12, 14 auch nicht erneut zusammengefahren werden, sodass die Übergabe des Faserverbundbauteils direkt in der Stellung erfolgt, in der die Werkzeugteile ein kleines Stück auseinander gefahren worden sind.

Anschließend werden die beiden Werkzeugteile 12, 14 vollständig auseinander gefahren, sodass das hergestellte Faserverbundbauteil aus dem vordefinierten Werkzeugteil 12 entnommen werden kann.

Hierdurch ist sichergestellt, dass das fertiggestellte Faserverbundbauteil im vordefinierten Werkzeugteil 12 gehalten ist und zudem von dessen Oberfläche gelöst ist, sodass es leicht entnommen werden kann.

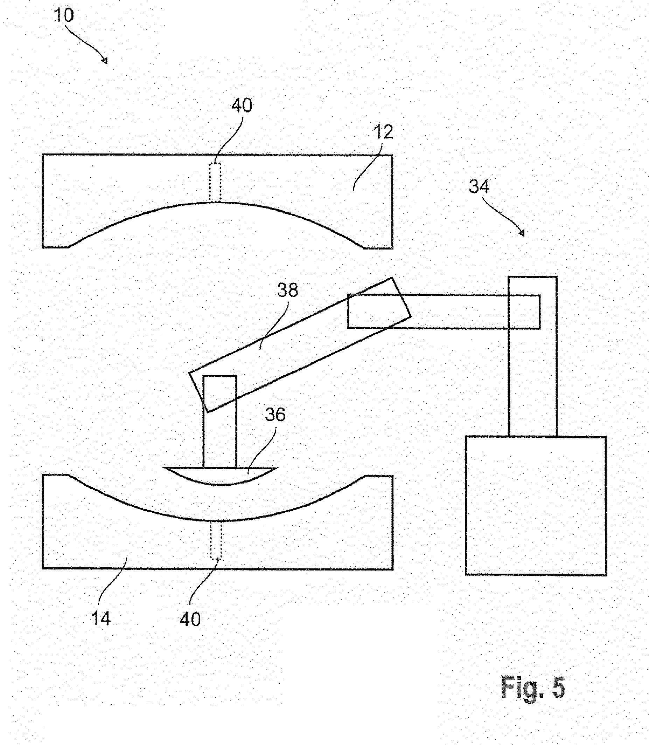

In Figur 5 ist eine weitere Ausführungsform gezeigt, wobei das Werkzeug 10 zusätzlich ein Entnahmeelement 34 aufweist, das unter anderem einen Vakuumsauger 36 umfasst.

Über das Entnahmeelement 34 und den Vakuumsauger 36 kann das fertiggestellte Faserverbundbauteil aus dem vordefinierten Werkzeugteil 12, 14 entnommen werden.

Das Entnahmeelement 34 ist in der gezeigten Ausführungsform als Roboter mit einem beweglichen Gelenkarm 38 ausgebildet, sodass das entnommene Faserverbundbauteil direkt zur nächsten Station befördert werden kann.

Eine Ausgestaltung der Erfindung sieht vor, dass das Werkzeug 10 Luftauswerfer 40 umfasst, die in Figur 5 gestrichelt dargestellt sind. Die Luftauswerfer 40 können einem der Werkzeugteile 12, 14 oder beiden Werkzeugteilen 12, 14 zugeordnet sein, wie dies gezeigt ist. Die Luftauswerfer 40 sind an der Oberfläche der Teilkavität 18 endende, im Werkzeugteil 14 vorgesehene Druckluftkanäle.

Die Luftauswerfer 40, die in dem Werkzeugteil 14 vorgesehen sind, welches demjenigen entspricht, in dem das hergestellte Faserverbundbauteil vom Halteelement 22 gehalten wird, unterstützen die Entnahme des fertiggestellten Faserverbundbauteils durch das Entnahmeelement 34, indem nach dem Pressen und Öffnen des Werkzeugs 10 Druckluft ausgeblasen wird.

Auch die Luftauswerfer 40, die am anderen Werkzeugteil 12 vorgesehen sind, unterstützen das Lösen des Faserverbundbauteils von der Oberfläche der Teilkavität 16 beim Öffnen des Werkzeugs 10.

Die Luftauswerfer 40 können alternativ zu den zwei Halteelementen 22a, 22b oder ergänzend hierzu vorgesehen sein.

Generell ist vorgesehen, dass die Oberflächen der Teilkavitäten 16, 18 eine geringe Rauigkeit aufweisen, wodurch die Entnahme des Faserverbundbauteils unterstützt wird. Die Oberflächen können beschichtet, plasmanitriert oder verchromt sein, um hochwertige Oberflächen bereitzustellen, die die Herstellung des Faserverbundbauteils und dessen Entnahme unterstützen. Wenn die Oberflächen plasmanitriert sind, können sie insbesondere auch spiegelpoliert sein.

Mit dem erfindungsgemäßen Werkzeug 10 ist eine prozesssichere Entformung des Werkzeugs 10 gewährleistet, wobei sich das fertiggestellte Faserverbundbauteil immer in einem vordefinierten Werkzeugteil nach der Entformung befindet. Hierdurch ist ein automatisierter Serienbetrieb möglich, der störungsunanfällig ist.

## Patentansprüche

1. Werkzeug (10) zur Herstellung eines Faserverbundbauteils, mit wenigstens zwei Werkzeugteilen (12, 14), die Teilkavitäten (16, 18) haben und in einer Herstellungsposition derart zusammengefahren sind, dass sie eine Kavität (20) bilden, in der das Faserverbundbauteil hergestellt werden kann, wobei wenigstens einem ersten Werkzeugteil (14) ein Halteelement (22) zugeordnet ist, das das hergestellte Faserverbundbauteil im ersten Werkzeugteil (14) halten kann, wenn die Werkzeugteile (12, 14) nach der Herstellung des Faserverbundbauteils auseinander gefahren werden, und das zwischen einer Ausgangsposition und einer Halteposition schwenkbar ist.

2. Werkzeug (10) nach Anspruch 1, **dadurch gekennzeichnet, dass** das Halteelement (22) pneumatisch, hydraulisch oder elektrisch betätigbar ist, insbesondere ein pneumatisch, hydraulisch oder elektrisch betätigbarer Spanner ist.

3. Werkzeug (10) nach einem der vorhergehenden Ansprüche, **dadurch gekennzeichnet, dass** die Werkzeugteile (12, 14) jeweils Oberflächen aufweisen, mit denen das herzustellende Faserverbundbauteil in Kontakt ist.

4. Werkzeug (10) nach Anspruch 3, **dadurch gekennzeichnet, dass** die Oberflächen beschichtet sind.

5. Werkzeug (10) nach Anspruch 3 oder 4, **dadurch gekennzeichnet, dass** die Oberflächen plasmanitriert, spiegelpoliert oder verchromt sind.

6. Werkzeug (10) nach einem der vorhergehenden Ansprüche, **dadurch gekennzeichnet, dass** das Werkzeug (10) ein Entnahmeelement (34) aufweist, welches das hergestellte Faserverbundbauteil aus dem Werkzeug (10) entnimmt.

7. Werkzeug (10) nach Anspruch 6, **dadurch gekennzeichnet, dass** das Entnahmeelement (34) wenigstens einen Vakuumsauger (36) umfasst, über den das hergestellte Faserverbundbauteil entnommen werden kann.

8. Werkzeug (10) nach Anspruch 6 oder 7, **dadurch gekennzeichnet, dass** das Entnahmeelement (34) ein Roboter ist, insbesondere ein Roboter mit einem beweglichen Arm (38).

9. Werkzeug (10) nach einem der vorhergehenden Ansprüche, **dadurch gekennzeichnet, dass** wenigstens ein Luftauswerfer (40) in zumindest einem der Werkzeugteile (12, 14) vorgesehen ist.

10. Werkzeug (10) nach einem der vorhergehenden Ansprüche, **dadurch gekennzeichnet, dass** in beiden Werkzeugteilen (12, 14) jeweils ein Halteelement (22) vorgesehen ist.

11. Werkzeug (10) nach einem der vorhergehenden Ansprüche, **dadurch gekennzeichnet, dass** die Werkzeugteile (12, 14) jeweils eine Aussparung aufweisen, in denen das Halteelement (22) angeordnet ist.

## Claims

1. Tool (10) for producing a fiber composite component having at least two tool parts (12, 14) which have partial cavities (16, 18) and which are moved together in a production position in such a manner that said two tool parts (12, 14) form a cavity (20) in which the fiber composite component is able to be produced, wherein at least a first tool part (14) is assigned a retention element (22) which is able to retain the produced fiber composite component in first tool part (14) when the tool parts (12, 14) are moved apart after the production of the fiber composite component, and which is pivotable between a starting position and a holding position.

2. Tool (10) according to Claim 1, **characterized in that** the retention element (22) is able to be actuated pneumatically, hydraulically or electrically, in particular is a pneumatically, hydraulically or electrically actuatable tensioner.

3. Tool (10) according to one of the preceding claims, **characterized in that** the tool parts (12, 14) have in each case surfaces with which the fiber composite component to be produced is in contact.

4. Tool (10) according to Claim 3, **characterized in that** the surfaces are coated.

5. Tool (10) according to Claim 3 or 4, **characterized in that** the surfaces are plasma-nitrided, mirror-polished or chromium-plated.

6. Tool (10) according to one of the preceding claims, **characterized in that** the tool (10) has a retrieval element (34) which retrieves the fiber composite component produced from the tool (10).

7. Tool (10) according to Claim 6, **characterized in that** the retrieval element (34) comprises at least one vacuum suction device (36) by way of which the fiber composite component produced can be retrieved.

8. Tool (10) according to Claim 6 or 7, **characterized in that** the retrieval element (34) is a robot, in particular a robot with a movable arm (38).

9. Tool (10) according to one of the preceding claims, **characterized in that** at least one air ejector (40) is provided in at least one of the tool parts (12, 14) .

10. Tool (10) according to one of the preceding claims, **characterized in that** one retention element (22) is in each case provided in both tool parts (12, 14).

11. Tool (10) according to one of the preceding claims, **characterized in that** the tool parts (12, 14) have in each case one recess in which the retention element (22) is disposed.

## Revendications

1. Outil (10) pour la fabrication d'un composant composite fibreux, comprenant au moins deux parties d'outil (12, 14), qui ont des cavités partielles (16, 18) et sont réunies dans une position de fabrication de telle sorte qu'elles forment une cavité (20), dans laquelle le composant composite fibreux peut être fabriqué, un élément support (22) étant associé à au moins une première partie d'outil (14), qui peut supporter le composant composite fibreux fabriqué dans la première partie d'outil (14) lorsque les parties d'outil (12, 14) sont éloignées l'une de l'autre après la fabrication du composant composite fibreux, et qui est pivotable entre une position initiale et une position de support.

2. Outil (10) selon la revendication 1, **caractérisé en ce que** l'élément support (22) est actionnable pneumatiquement, hydrauliquement ou électriquement, notamment est un tendeur actionnable pneumatiquement, hydrauliquement ou électriquement.

3. Outil (10) selon l'une quelconque des revendications précédentes, **caractérisé en ce que** les parties d'outil (12, 14) présentent chacune des surfaces avec lesquelles le composant composite fibreux fabriqué est en contact.

4. Outil (10) selon la revendication 3, **caractérisé en ce que** les surfaces sont revêtues.

5. Outil (10) selon la revendication 3 ou 4, **caractérisé en ce que** les surfaces sont nitrées par plasma, polies miroir ou chromées.

6. Outil (10) selon l'une quelconque des revendications précédentes, **caractérisé en ce que** l'outil (10) comprend un élément d'extraction (34), qui extrait le composant composite fibreux fabriqué de l'outil (10).

7. Outil (10) selon la revendication 6, **caractérisé en ce que** l'élément d'extraction (34) comprend au moins une ventouse (36), par l'intermédiaire de laquelle le composant composite fibreux fabriqué peut être extrait.

8. Outil (10) selon la revendication 6 ou 7, **caractérisé en ce que** l'élément d'extraction (34) est un robot, notamment un robot comprenant un bras mobile (38) .

9. Outil (10) selon l'une quelconque des revendications précédentes, **caractérisé en ce qu'**au moins un éjecteur d'air (40) est prévu dans au moins une des parties d'outil (12, 14).

10. Outil (10) selon l'une quelconque des revendications précédentes, **caractérisé en ce qu'**un élément support (22) est prévu dans chacune des deux parties d'outil (12, 14).

11. Outil (10) selon l'une quelconque des revendications précédentes, **caractérisé en ce que** les parties d'outil (12, 14) comprennent chacune un évidement, dans lequel l'élément support (22) est agencé.
